Europäisches Patentamt

European Patent Office

Office européen des brevets

(11) Publication number: **0 081 613**
**B1**

(12) **EUROPEAN PATENT SPECIFICATION**

(45) Date of publication of patent specification: **26.02.86**

(21) Application number: **81305894.8**

(22) Date of filing: **15.12.81**

(51) Int. Cl.⁴: **B 62 D 13/04,** B 62 D 63/06

(54) **Trailer with mass restraint.**

(43) Date of publication of application:
**22.06.83 Bulletin 83/25**

(45) Publication of the grant of the patent:
**26.02.86 Bulletin 86/09**

(84) Designated Contracting States:
**AT CH DE FR GB IT LI NL SE**

(56) References cited:
**GB-A-1 225 481**
**US-A-1 821 816**
**US-A-2 485 853**
**US-A-3 291 503**

(73) Proprietor: **THE FIRESTONE TIRE & RUBBER
COMPANY
1200 Firestone Parkway
Akron, Ohio 44317 (US)**

(72) Inventor: **Charek, Leonard T.
5510 Appleridge Circle
Clinton Ohio 44216 (US)**

(74) Representative: **Bass, John Henton et al
REDDIE & GROSE 16 Theobalds Road
London WC1X 8PL (GB)**

Courier Press, Leamington Spa, England.

## Description

### Field of the Invention

This invention relates to a trailer having two castering, steerable wheels. Among presently known two-wheel trailers there may be found those which have multiple substantially fixed hitches for fastening the trailer to the towing vehicle. By use of such a hitch, rather than the conventional single ball-hitch, the trailer tends to be held in longitudinal alignment with the towing vehicle and may thus easily be backed up straight.

In order to avoid "scrubbing" of the tires on curves, it is known to provide wheels which pivot independently about upright king-pins, and to connect the wheels through a tie-rod so that they pivot in unison.

Further, it is known to incline the king-pins at an angle to facilitate steering of the trailer wheels; inclination toward the rear aids steering forward. Reversing the caster angle to incline the pin forward facilitates steering in reverse. Mechanical means may be used for changing the caster angle, as well as, for example, electrical means tied to the reverse gear switch or to the back-up lights of the tow-vehicle.

The steering characteristics of the above mentioned multiple-hitch trailer with freely pivoting wheels, in conjunction with its tow vehicle or car are not acceptable, in that the car-trailer system tends to skid or spin out during cornering, i.e. the vehicle system has oversteer characteristics.

### Prior Art

Prior art devices intended to overcome inferior handling and sideslipping of the vehicle have used the inertia of a mass to resist lateral motion. Among these, US—A—1 821 816 describes a device according to the pre-characterising part of claim 1 for preventing side slips in motor vehicles or the like which comprises a mass supported by the wheels and laterally movable with respect to the pivot of the wheels, being carried on a rod extending longitudinally of the vehicle and pivoted to the vehicle about a vertical axis. Stays connect the rod to the frame of the vehicle as near to the back axle as possible.

US—A—3 602 525 discusses a device for generating an inward force but, during a steady state turn, all forces on the walls of the box balance out, eliminating any benefit of the device.

It is an object of the invention to provide a structure in a longitudinally fixed axle trailer having means for overcoming the oversteer inherent with freely castering wheels.

### Summary of the Invention

The present invention solves the problems by utilising a mass which responds to the lateral acceleration developed in cornering to create a useful force acting through a linkage to steer the trailer tires and oppose the tendency of the vehicle system to skid or spin out.

In accordance with this invention, a trailer is characterised in that the mass is connected with the wheel pivot to apply a steering moment upon lateral acceleration of the mass and to balance an opposed second movement applied about the pivot by the ground reactive force on the wheels.

### Description of the Drawings

Figure 1 is a top view of one embodiment of the trailer of the invention, with non-essential parts removed for clarity;

Figure 2 is a schematic side view showing a portion of the steering assembly during forward motion;

Figure 3 is a schematic top view showing a portion of the steering assembly of the invention;

Figure 4 is a schematic top view showing a modified form of the invention; and

Figure 5 is a perspective view of a further modification of the invention, with certain parts removed for clarity.

### Description of a Preferred Embodiment

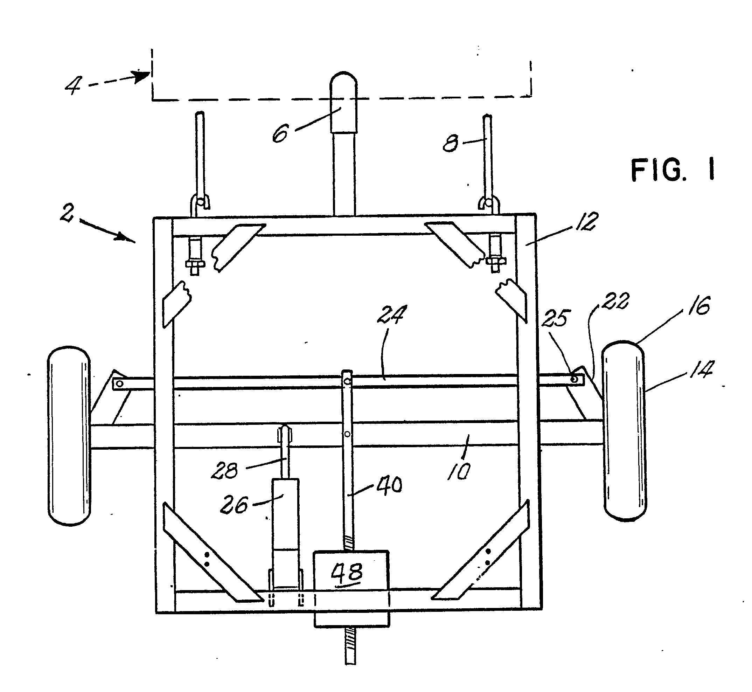

In Figure 1, a trailer denoted generally at 2 is attached to a towing vehicle 4 (shown in phantom) by a hitch including a ball hitch 6 and two tension members 8 in an arrangement which ensures that the trailer axle 10 will generally remain parallel to the axle of the towing vehicle; in other words, the trailer will not yaw. At the same time, the trailer may roll a limited amount about its longitudinal axis, and may pitch up and down. It will be clear that, so long as the fixed relationship described is maintained between tow vehicle and trailer, the tension members may be replaced by compression members.

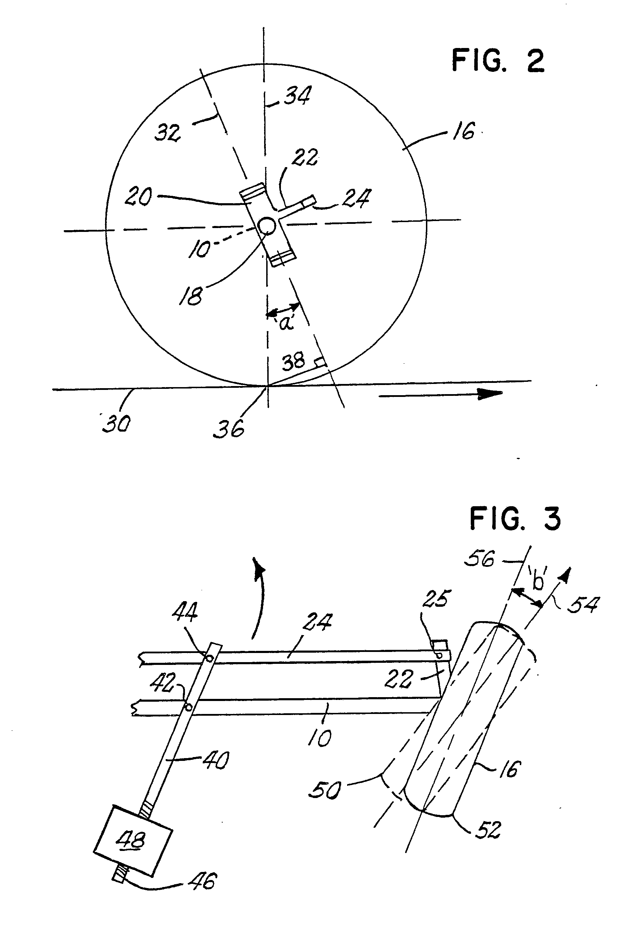

The frame 12 of the trailer is suitably sprung on the axle by means not shown. The axle 10 carries steerable wheels 14 having pneumatic tires 16 mounted thereon. As best seen in Figures 2 and 3, each wheel is carried on the spindle 18 of an upright king-pin 20 from which extends also a tie-rod connector 22 pivotally connected to tie rod 24 at 25. While the king-pin 20 turns so that the tire steers right or left, it is itself pivoted in the vertical plane to permit the caster angle of the tire to be changed. In its simplest form, pivoting of the king-pin may be accomplished by activating a linear actuator such as a pressure cylinder 26 secured to frame 12 and having a rod 28 which rotates the axle 10 and thus the king-pin 20 through the desired number of degrees. In Figure 2, the arrow indicates the direction of travel of tire 16 along the ground 30. The kin-pin is shown inclined rearwardly, so that its steering axis 32 intersects the ground at a point ahead of the vertical center line 34 of the tire 16. The intersection of the center line 34 with the ground is named the center of contact pressure 36 of the tire; this is the point at which the force of the ground acts upon the tire. In this condition, the tire will caster as it is moved along the ground, the angle 'a' between the tire centerline 34 and the steering axis 32 being the caster angle. The distance normally from point 36 at center line 34 to axis 32 represents a moment arm 38 through which the ground reaction force acts.

An arm 40 is pivotally fixed to the angle 10 at 42; one end of the arm is movably pivoted to the tie rod 24 at 44, while the other end is threaded as at 46 and carries an adjustable weight or mass restraint 48.

In Figure 3 is shown the situation where a turn to the left in the direction of the arrow takes place.

Without the mass restraint 48 in place, if the direction of tire travel as indicated by line 54 does not coincide with the plane of the tire 16, i.e. if the tire is running at a slip angle, a ground reaction force is generated at 36 (see Fig. 2) and acts through the moment arm 38. This generates a moment about 32 which steers the tires into the travel direction 54, a tire position indicated by the dashed outline 50. In this position, no net moment exists about the steering axis 32 and the tire will remain in this position unless the radius of the turn is changed.

Since the direction of tire travel is in the plane of the tire, no slip angle is present, and no tire side force is generated. Thus, additional mass has been added to the rear of the tow vehicle without providing additional cornering force by the trailer tires. When a turn is made, the additional force needed to restain this mass from spinning out must come from the rear tires of the tow vehicle. At some level of turn severity, the rear tires will be unable to provide enough side force, and the vehicle system will spin out.

With the mass restraint 48 in place, however, its acceleration toward the right during the continuation of the left turn creates a counter-clockwise moment about pivot 42; this is transferred through the steering linkage shown and appears as a counter-clockwise moment about the steering axis 32.

This moment causes the tires to turn from the dashed position 50, through angle 'b' referred to as the slip angle, to position 52. At this slip angle, the tire will generate a force at 36 into the page (Fig. 2), acting through the arm 38 to create a moment clockwise about the steering axis 32. This balances the counter-clockwise moment due to the mass restraint 48, thereby eliminating any net moment about the steering axis 32. The side force generated at 36 is proportional to slip angle 'b'; therefore the tires will not steer beyond position 52 since this would result in an increased clockwise moment about 32 and return the tires to position 52.

The amount of side force developed by the trailer tires is thus controlled by the size of the mass 48. By properly selecting its size, the force (weight) acting to skid the trailer out of the turning circle can be exactly balanced by the force of the ground reacting at 36 toward the inside of the turn. At this point, the trailer exerts no steering effect on the tow vehicle.

The trailer of Figures 1 and 3 exhibited a weight of about 68 kilograms (kg), carried on two 4-ply rating pneumatic tires mounted on 200 millimeter (mm) diameter wheels and having a vertical section height of about 100 mm. The inflation pressure of the tires was approximately 276 kilo pascals (kPa). The caster angle 'a' was set by means of actuator 26 at approximately 15°, resulting in a moment arm 38 of about 51 mm.

It was found that, during cornering, a mass 48 of 4.5 kg, adjusted along the threaded portion 46 to a point where the arm 40 to the mass-center was 760 mm long, would minimize the effect of the trialer on the handling characteristics of the tow vehicle.

The following analysis obtains. Assuming, for example, that the lateral acceleration during a turn is 1 g, the mass of the restraint 48 results in a moment of approximately 34 Newton-meters (N.m) about the steering axis 32. This moment must be balanced by an opposing moment provided by the tire side force acting at 36 through the moment arm 38. Since the length of 38 is 51 mm, a force of approximately 67 kg must be developed at 36 to generate the necessary 34 N.m counter-moment.

With the trailer at about 68 kg, it will be noted that the clockwise and counter-clockwise moments about the steering axis are substantially balanced. Different accelerations would influence equally the force generated at 36 and the force generated by the trailer-mass, provided the trailer mass and the restraint remain unchanged.

In a further test, with an additional 110 kg load in the trailer, a balance-condition was achieved with a mass 48 weight of 11 kg at 760 mm. This acknowledges that the moment arm 38 was now slightly shorter than 51 mm, due to the fact that the additional load had flattened the tire somewhat and moved point 36 vertically a slight amount.

In all instances, the relationship established above proved true on actual test; i.e., handling characteristics were greatly improved when the ratio of the mass of the trailer to the mass of restraint 48 substantially equalled the ratio of the length of arm 40 to the length of arm 38.

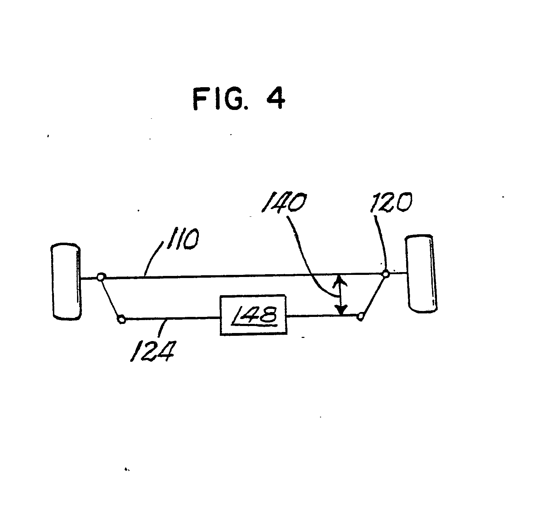

Figure 4 shows, in a trailer travelling in the direction of the arrow, an application of the invention which contemplates a mass 148 located directly on the tie rod 124, acting through arm 140 to create a moment around the king pin steering axis 120. With the moment arm 140 held quite short, it will be noted that mass 48 must be of substantial size and, in fact, approach the weight of the trailer it is attempting to balance out.

It may not always be desirable to utilize a system in which the effect of the mass restraint must be adjusted either by its size or in the length of its arm. Another approach utilizes the trailer box and cargo mass as the restraint mass, in the following manner.

It is not necessary that the mass be applied directly as a weight in order to correct the steer, so long as its motion upon lateral acceleration will effect the necessary countering pivoting of the tires about the king pin. The weight of the trailer may therefore be supported vertically on the axle, for example, so long as that support allows reasonably free lateral motion within a limited area.

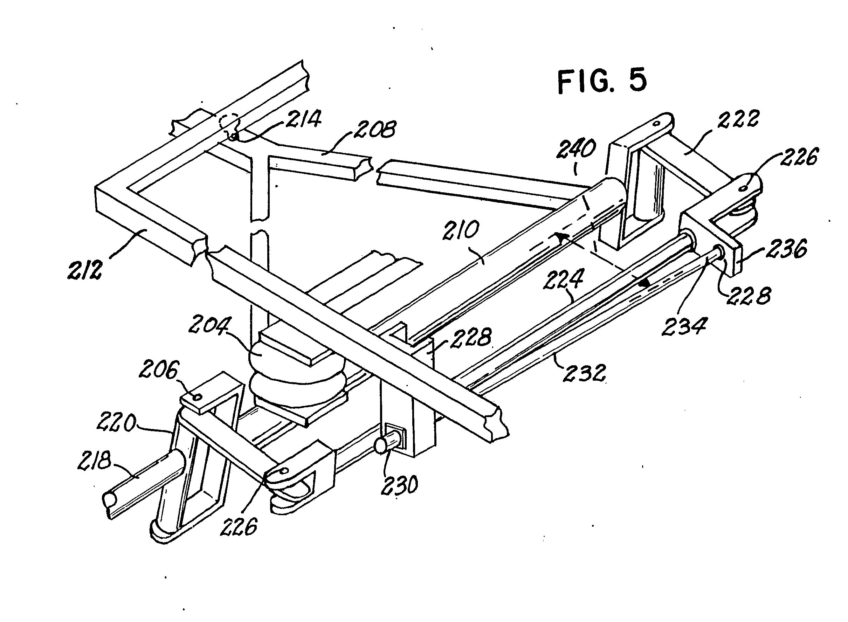

The significant portion of such an arrangement is seen in Fig. 5 in which the weight of the trailer, represented by the frame 212, is supported on axle 210 by inflatable airsprings 204 designed to allow lateral displacement. As previously stated, the axle is held against yaw with respect to the tow vehicle, as for example by an axle support such as draw-bars 208 which may form part of the trailer hitch (not shown). The main trailer weight is thus supported by airsprings 204, which allow the frame a limited lateral motion with respect to the axle 210 and about the front pivot ball 214 set in the axle support.

Each king pin 220 is pivotable about its steering axis at 206, while the steering axis may be shifted by means, not shown, but similar to 26, 28 of Figure 1. Each king-pin carries a wheel spindle 218 as well as a tie-rod connector 222 pivotally engaged with the tie-rod 224 at pivot 226. The frame 212 is provided with a bracket or strut 228 which carries one end 230 of a steering rod 232 extending substantially transversely of the frame. The other end 234 of the steering rod engages a bracket or flange 236 forming a portion of one end of the tie-rod 224. Since the frame will move vertically and tilt on its airspring suspension as it travels over the road, the ends 230 and 234 of the steering rod are lodged in strut 228 and in the flange 236, respectively, in an articulated manner including for example bushings or bearings such as 238. Lateral motion of the frame 212 will, through strut 228, steering rod 232, flange 236, and tie-rod connector 222 effectively turn the king-pins 220 in a direction to generate controlling side force by the tires, while minimizing steering effects due to vertical motion in flange 236.

The distance 240 between axle 210 and steering rod 232 is preferably designed to be substantially as long as the moment arm (see Fig. 2). In this manner, the force generated by the acceleration of the weight of the trailer, multiplied by the moment-arm 240, will substantially equal and oppose the ground reaction force at 36 multiplied by the moment arm 38, to balance the steer.

Thus, with the moment arms 38 and 240 equal, the lateral force resulting from the weight on the trailer must always equal the steer-correction force.

## Claims

1. A trailer having wheels (16) steerable about a pivot (20, 120, 220) and a mass (48, 148, 212) laterally movable with respect to the pivot characterised in that the mass is connected with the wheel pivot to apply a steering moment upon lateral acceleration of the mass and to balance an opposed second moment applied about the pivot by the ground reactive force on the wheels.

2. A trailer according to claim 1, in which each wheel (16) is mounted on a pivoted member (18, 218) at each end of a transverse axle (10, 110, 210) a connecting rod (24, 124, 224) connects the pivoted members to turn the wheels in unison, and the mass (48, 148, 212) acts on the connecting rod to apply a turning moment to each of the pivoted members (20, 120, 220) upon lateral acceleration of the mass.

3. A trailer according to claim 2, in which the mass (48) acts on the connecting rod (24) through an arm (40) pivoted on the axle (10).

4. A trailer according to claim 2, in which the mass (148) is located on the connecting rod (124).

5. A trailer according to claim 2, in which a steering rod (232) is connected to the load-bearing frame (212) of the trailer to apply the steering moment about the pivot (220).

6. A trailer according to claim 5, in which the length of the moment arm (38) through which the said mass acts is substantially equal to that (240) through which the ground reactive force acts.

7. A trailer according to claim 5 or 6, characterised in that the steering rod (232) extends substantially horizontally.

8. A trailer according to any preceding claim, characterised in that the mass (212) is supported by lateral motion suspension means (204).

## Revendications

1. Remorque comportant des roues (16) orientables autour d'un pivot (20, 120, 220) et une masse (48, 148, 212) mobile latéralement par rapport au pivot, caractérisée en ce que la masse est reliée au pivot de la roue afin d'appliquer un moment de braquage sous l'effet d'une accélération latérale de la masse et d'équilibrer un second moment opposé appliqué autour du pivot par la force de réaction du sol sur les roues.

2. Remorque selon la revendication 1, dans laquelle chaque roue (16) est montée sur un élément articulé (18, 218) à chaque extrémité d'un essieu transversal (10, 110, 210), une barre d'accouplement (24, 124, 224) relie les éléments articulés afin de faire tourner les roues ensemble, et la masse (48, 148, 212) agit sur la barre d'accouplement afin d'appliquer un moment de rotation à chacun des éléments articulés (20, 120, 220) à la suite d'une accélération latérale de la masse.

3. Remorque selon la revendication 2, dans laquelle la masse (48) agit sur la barre d'accouplement (24) par l'intermédiaire d'un bras (40) articulé sur l'essieu (10).

4. Remorque selon la revendication 2, dans laquelle la masse (148) est placée sur la barre d'accouplement (124).

5. Remorque selon la revendication 2, dans laquelle une barre de direction (232) est reliée au châssis (212) de charge de la remorque afin d'appliquer le moment de braquage autour du pivot (220).

6. Remorque selon la revendication 5, dans laquelle la longueur du bras de moment (38) par l'intermédiaire duquel ladite masse agit est sensiblement égale à celle (240) par l'intermédiaire de laquelle la force de réaction du sol agit.

7. Remorque selon la revendication 5 ou 6, caractérisée en ce que la barre de direction (232) s'étend à peu près horizontalement.

8. Remorque selon l'une quelconque des revendications précédentes, caractérisée en ce que la masse (212) est supportée par des moyens de suspension (204) à mouvement latéral.

## Patentansprüche

1. Anhänger mit Rädern (16), die um einen Drehpunkt (20, 120, 220) lenkbar sind, und einer Masse (48, 148, 212), die in Bezug zum Drehpunkt seitlich bewegbar ist, dadurch gekennzeichnet, daß die Masse mit dem Raddrehpunkt verbunden ist, um ein Steuermoment auf die seitliche Beschleunigung der Masse auszuüben und ein entgegengesetztes zweites Moment auszugleichen, das durch die Bodenrückkopplungskraft über den Drehpunkt auf die Räder ausgeübt wird.

2. Anhänger nach Anspruch 1, dadurch gekennzeichnet, daß jedes Rad (16) an einem Drehglied (18, 218) befestigt ist, wobei an jedem Ende einer Querachse (10, 110, 210) eine Verbindungsstange (24, 124, 224) die Drehglieder verbindet, um die Räder gleichzeitig zu drehen, und daß die Masse (48, 148, 212) auf die Verbindungsstange wirkt und ein Drehmoment auf jedes der Drehglieder (20, 120, 220) nach der seitlichen Beschleunigungs der Masse ausübt.

3. Anhänger nach Anspruch 2, dadurch gekennzeichnet, daß die Masse (48) auf die Verbindungsstange (24) durch einen Arm (40) wirkt, der auf der Achse (10) dreh- bzw. schwenkbar gelagert ist.

4. Anhänger nach Anspruch 2, dadurch gekennzeichnet, daß die Masse (148) auf der Verbindungsstange (124) angeordnet ist.

5. Anhänger nach Anspruch 2, dadurch gekennzeichnet, daß die Steuerstange (232) mit dem lasttragenden Rahmen (212) des Anhängers verbunden ist, um ein Steuermoment auf den Drehpunkt (220) auszuüben.

6. Anhänger nach Anspruch 5, dadurch gekennzeichnet, daß die Länge des Momentarms (38), durch den die Masse wirkt, im wesentlichen derjenigen (240) entspricht, durch die die Bodenrückkopplungskraft wirkt.

7. Anhänger nach Anspruch 5 oder 6, dadurch gekennzeichnet, daß die Steuerstange (232) sich im wesentlichen horizontal erstreckt.

8. Anhänger nach irgendeinem der vorstehenden Ansprüche, dadurch gekennzeichnet, daß die Masse (212) durch seitliche Bewegungsaufhängungsmittel (204) gestützt wird.

FIG. I

FIG. 2

FIG. 3

# FIG. 4

FIG. 5